# EUROPEAN PATENT APPLICATION

(11) **EP 4 852 583 A1**
(43) Date of publication of application: **09.12.2026**
(21) Application number: 25747915.4
(22) Date of filing: 26.01.2025
(51) Int. Cl.: H04W 72/23

(54) **OCC DETERMINATION METHOD AND APPARATUS, AND DEVICE AND STORAGE MEDIUM**

(30) Priority: 02.02.2024 CN 202410151911
(71) Applicant: Vivo Mobile Communication Co., Ltd., Dongguan, Guangdong 523863 (CN)
(72) Inventor: ZHENG, Kaili, Dongguan, Guangdong 523863 (CN); WANG, Yong, Dongguan, Guangdong 523863 (CN); LIU, Siqi, Dongguan, Guangdong 523863 (CN); WANG, Zhen, Dongguan, Guangdong 523863 (CN)
(74) Representative: Murgitroyd & Company
(86) International application number: PCT/CN2025/075075
(87) International publication number: WO 2025/162347

(57) **Abstract**

This application discloses an OCC determining method and apparatus, a device, and a storage medium, and belongs to the field of communication technologies. The OCC determining method in embodiments of this application includes: A terminal obtains first information. The terminal determines OCC information based on the first information, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

## Description

### CROSS-REFERENCE TO RELATED APPLICATION

This application claims priority to Chinese Patent Application No. 202410151911.8, filed in China on February 2, 2024, which is incorporated herein by reference in its entirety.

### TECHNICAL FIELD

Embodiments of this application relate to the field of communication technologies, and in particular, to an OCC determining method and apparatus, a device, and a storage medium.

### BACKGROUND

Orthogonal cover code (Orthogonal cover code, OCC) can implement multiplexing of uplink signals of a plurality of terminals, for example, multiplexing of uplink data signals. However, for terminals multiplexed based on the OCC, how to determine used OCC-related information is an urgent problem to be resolved.

### SUMMARY

Embodiments of this application provide an OCC determining method and apparatus, a device, and a storage medium, to resolve a problem about how to determine used OCC-related information for terminals multiplexed based on an OCC sequence.

According to a first aspect, an OCC determining method is provided. The method includes: A terminal obtains first information. The terminal determines OCC information based on the first information, where the OCC information is associated with transmission of a first signal. The first information includes at least one of the following: demodulation reference signal (Demodulation Reference Signal, DMRS) information; time domain resource allocation (Time Domain Resource Allocation, TDRA) information; start and length indicator value (Start and Length Indicator Value, SLIV) information; a time interval between the first signal and a second signal for scheduling the first signal; a resource allocation type of the first signal; resource unit (Resource Unit, RU) information; and an OCC-related parameter indicated by a network side device.

According to a second aspect, an OCC determining method is provided. The method includes: A network side device sends first information to a terminal, where the first information is used to determine OCC information, and the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by the network side device.

According to a third aspect, an OCC determining apparatus is provided. The apparatus includes an obtaining module and a determining module. The obtaining module is configured to obtain first information. The determining module is configured to determine OCC information based on the first information obtained by the obtaining module, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

According to a fourth aspect, an OCC determining apparatus is provided. The apparatus includes a sending module. The sending module is configured to send first information to a terminal, where the first information is used to determine OCC information, and the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

According to a fifth aspect, a terminal is provided. The terminal includes a processor and a memory. The memory stores a program or instructions executable on the processor. When the program or the instructions are executed by the processor, the steps of the method according to the first aspect are implemented.

According to a sixth aspect, a terminal is provided, and includes a processor and a communication interface. The processor is configured to: obtain first information; and determine OCC information based on the first information, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

According to a seventh aspect, a network side device is provided. The network side device includes a processor and a memory. The memory stores a program or instructions executable on the processor. When the program or the instructions are executed by the processor, the steps of the method according to the first aspect are implemented.

According to an eighth aspect, a network side device is provided, and includes a processor and a communication interface. The communication interface is configured to send first information to a terminal, where the first information is used to determine OCC information, and the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by the network side device.

According to a ninth aspect, a readable storage medium is provided. The readable storage medium stores a program or instructions. When the program or the instructions are executed by a processor, a step of the method according to the first aspect is implemented, or a step of the method according to the second aspect is implemented.

According to a tenth aspect, a wireless communication system is provided, and includes a terminal and a network side device. The terminal may be configured to perform a step of the method according to the first aspect. The network side device may be configured to perform a step of the method according to the second aspect.

According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored in a storage medium. The program/program product is executed by at least one processor to implement a step of the OCC determining method according to the first aspect or a step of the OCC determining method according to the second aspect.

In embodiments of this application, a terminal may determine OCC information based on first information, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device. In this solution, the terminal may determine, based on the first information, the OCC information related to the transmission of the first signal. In other words, the terminal flexibly determines the OCC information used for the transmission of the first signal, to implement multiplexing based on the OCC information, so that orthogonality of multiplexing of a plurality of terminals is ensured, and an uplink transmission capacity is improved.

### BRIEF DESCRIPTION OF THE DRAWINGS

FIG. 1 is a diagram of an architecture of a wireless communication system according to an embodiment of this application;
FIG. 2 is a flowchart 1 of an OCC determining method according to an embodiment of this application;
FIG. 3 is a flowchart 2 of an OCC determining method according to an embodiment of this application;
FIG. 4 is a diagram 1 of a structure of an OCC determining apparatus according to an embodiment of this application;
FIG. 5 is a diagram 2 of a structure of an OCC determining apparatus according to an embodiment of this application;
FIG. 6 is a diagram of a hardware structure of a communication device according to an embodiment of this application;
FIG. 7 is a diagram of a hardware structure of a terminal according to an embodiment of this application; and
FIG. 8 is a diagram of a hardware structure of a network side device according to an embodiment of this application.

### DETAILED DESCRIPTION

The following clearly describes the technical solutions in embodiments of this application with reference to the accompanying drawings in embodiments of this application. It is clear that described embodiments are a part of embodiments of this application rather than all embodiments of this application. All other embodiments obtained by a person of ordinary skill in the art based on embodiments of this application fall within the protection scope of this application.

The terms such as "first" and "second" in this application are used to distinguish between similar objects, but are not used to describe a specific sequence or order. It should be understood that the terms used in this way are interchangeable in an appropriate case, so that embodiments of this application can be implemented in a sequence other than those illustrated or described herein. In addition, objects distinguished by using "first" and "second" are generally of the same type, and a number of objects is not limited. For example, there may be one or more first objects. In addition, "or" in this application indicates at least one of connected objects. For example, "A or B" covers three solutions: solution 1: including A and excluding B; solution 2: including B and excluding A; and solution 3: including both A and B. The character "/" usually indicates an "or" relationship between the associated objects.

The term "indication" in this application may be a direct indication (or an explicit indication), or may be an indirect indication (or an implicit indication). The direct indication may be understood as that a sending party clearly notifies, in a sent indication, a receiving party of specific information, an operation needing to be performed, a request result, or the like. The indirect indication may be understood as that a receiving party determines corresponding information based on an indication sent by a sending party, or judges based on the indication sent by the sending party, and determines an operation needing to be performed, a request result, or the like based on a judging result.

The terms "at least one (item)", "at least one of", and the like in this application refer to any one, any two, or a combination of two or more of the objects included thereof. For example, at least one (item) of a, b, or c may represent "a", "b", "c", "a and b", "a and c", "b and c", and "a, b, and c", where a, b, and c may be singular or plural. Similarly, "at least two (items)" means two or more, and the expressed meaning thereof is similar to that of "at least one (item)".

It should be noted that, the technology described in embodiments of this application may be applied to a long term evolution (Long Term Evolution, LTE)/LTE-advanced (LTE-Advanced, LTE-A) system, and may be further applied to another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in embodiments of this application are usually interchangeably used. The described technology may be applied to the system mentioned above and a radio technology, and may also be applied to another system and the radio technology. A new radio (New Radio, NR) system is described below as an example, and the term NR is used in most of the following descriptions. However, these technologies may also be applied to a system other than the NR system, for example, a 6^{th} generation (6^{th} Generation, 6G) communication system.

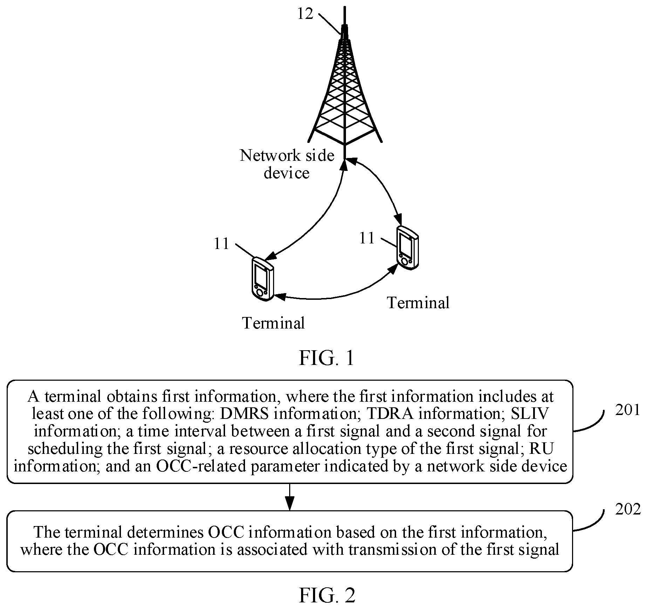

FIG. 1 is a block diagram of a wireless communication system to which an embodiment of this application is applicable. The wireless communication system includes a terminal 11 and a network side device 12. The terminal 11 may be a terminal side device like a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle-mounted device (Vehicle User Equipment, VUE), a ship-borne device, pedestrian user equipment (Pedestrian User Equipment, PUE), a smart home appliance (a home device having a wireless communication function, for example, a refrigerator, a television, a washing machine, or furniture), a game console, a personal computer (Personal Computer, PC), a teller machine, or a self-service machine. The wearable device is a smart watch, a smart band, a smart headset, smart glasses, smart jewelry (a smart bracelet, a smart chain bracelet, a smart ring, a smart necklace, a smart ankle bangle, a smart ankle chain, or the like), a smart wristband, smart clothing, or the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in embodiments of this application. The network side device 12 may be an access network device or a core network device. The access network device may also be referred to as a radio access network (Radio Access Network, RAN) device, a radio access network function, or a radio access network unit. The access network device may be a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another suitable term in the field, as long as the same technical effect is achieved, and the base station is not limited to a specific technical word. It should be noted that in embodiments of this application, the base station in the NR system is merely used as an example for description, and a specific type of the base station is not limited.

This application is applicable to an NTN scenario, a terrestrial network (Terrestrial Network, TN) scenario, and the like. This application is applicable to the NR system, a long term evolution narrow band internet of things (Long Term Evolution Narrow Band Internet of Things, LTE NB-IoT), an loT NTN system, and the like.

Some concepts and/or terms involved in an OCC determining method and apparatus, a device, and a storage medium provided in embodiments of this application are explained and described below.

### 1. Block-wise spreading (Block-wise spreading)

In a related protocol, to improve a terminal multiplexing capability, so as to improve a system capacity, an OCC-based block-wise spreading transmission method is introduced to physical uplink control channel (Physical Uplink Control Channel, PUCCH) transmission.

A PUCCH format 3 supports block-wise spreading transmission only in a case of interlace mapping (interlace mapping), and supports multiplexing of one user, two users, or four users only when a single interlace (single interlace) unit is configured.

A PUCCH format 4 supports multiplexing of two users or four users, and is configured by a higher layer parameter occ-Length, and a used OCC sequence is configured by a higher layer parameter occ-Index.

For block-wise spreading, after different terminals are multiplied by different OCC sequences, a feature of fast Fourier transform (Fast Fourier Transform, FFT) is used, so that after each discrete Fourier transform (Discrete Fourier Transform, DFT), the different terminals occupy different resource elements (Resource Elements, REs) during frequency domain mapping. For example, a terminal 0 occupies odd-numbered REs, and a terminal 1 occupies even-numbered REs, thereby achieving a comb (comb) mapping effect, and implementing multiplexing of a plurality of users.

### 2. DFT waveform physical uplink shared channel (Physical Uplink Shared Channel, PUSCH) demodulation reference signal (Demodulation Reference Signal, DMRS) port indication

In the NR system, a DMRS is used for channel estimation. DMRSs of a data channel may be classified into a DMRS configuration type 1 and a DMRS configuration type 2 based on types of the DMRSs, and the two DMRS configuration types both support a single-symbol structure and a two-symbol structure. For DFT waveform PUSCH transmission, each user supports a maximum of one PUSCH data stream, and supports only the DMRS configuration type 1, which corresponds to two code division multiplexing (Code Division Multiplexing, CDM) groups, and supports a maximum of eight ports.

The OCC determining method provided in embodiments of this application is described below in detail through some embodiments and application scenarios thereof with reference to the accompanying drawings.

An embodiment of this application provides an OCC determining method. FIG. 2 is a flowchart of an OCC determining method according to an embodiment of this application. As shown in FIG. 2, the OCC determining method provided in this embodiment of this application may include the following step 201 and step 202.

Step 201: A terminal obtains first information.

Step 202: The terminal determines OCC information based on the first information.

In this embodiment of this application, the OCC information is associated with transmission of a first signal. The first information includes at least one of the following:
DMRS information;
TDRA information;
SLIV information;
a time interval between the first signal and a second signal for scheduling the first signal;
a resource allocation type of the first signal;
RU information; and
an OCC-related parameter indicated by a network side device.

Transmission in this embodiment of this application may be understood as sending or receiving.

In this embodiment of this application, the terminal determines the OCC information based on the first information. In this way, the OCC information used for the transmission of the first signal can be flexibly determined, to implement multiplexing based on the OCC information, so that orthogonality of multiplexing of a plurality of terminals is ensured, and an uplink transmission capacity is improved.

Optionally, in this embodiment of this application, the first information may be predefined, or agreed on by a protocol, or preconfigured, or configured by the network side device.

Optionally, in this embodiment of this application, the first signal may include at least one of the following: a control channel, a data channel, a reference signal, and the like.

Optionally, in this embodiment of this application, the control channel may include at least one of the following: a PUCCH and a physical downlink control channel (Physical Downlink Control Channel, PDCCH).

Optionally, in this embodiment of this application, the data channel may include at least one of the following: a PUSCH and a physical downlink shared channel (Physical Downlink Shared Channel, PDSCH).

Optionally, in this embodiment of this application, the second signal may include at least one of the following: a PDCCH and a PDSCH.

For example, the time interval between the first signal and the second signal for scheduling the first signal may be an interval K0 between a PUSCH and a PDCCH for scheduling the PUSCH.

For example, the resource allocation type of the first signal may be a PUSCH time domain resource allocation type, namely, a mapping type (mapping type) A or B, or may be a PUSCH frequency domain resource allocation type, namely, a resource allocation type (resource allocation type) 0 or 1.

Optionally, in this embodiment of this application, the reference signal may include at least one of the following: a DMRS, a sounding reference signal (Sounding Reference Signal, SRS), and a channel-state information reference signal (Channel-State Information Reference Signal, CSI-RS).

Optionally, in this embodiment of this application, the OCC information may include at least one of the following: an OCC sequence set, an OCC sequence, an OCC sequence index set, an OCC sequence index, an OCC sequence length set, an OCC sequence length, and OCC enabling information. The OCC enabling information is used to enable whether the transmission of the first signal is based on the OCC information.

For example, the OCC information includes an OCC sequence, and the OCC sequence is used for multiplexing of PUSCHs corresponding to a plurality of terminals. In this case, the OCC sequence may be a TD-OCC sequence in time domain. For example, multiplexing is performed based on repetition in time domain. Alternatively, the OCC sequence may be an OCC sequence used for multiplexing in a block-wise spreading scheme or a scheme similar to the block-wise spreading scheme, and is used for multiplexing of resources of different terminals in frequency domain. Alternatively, the OCC sequence is a combination of the foregoing two types. Certainly, the OCC sequence may also be used for other forms of PUSCH multiplexing, to implement multiplexing and transmission of PUSCHs of a plurality of terminals.

Optionally, in this embodiment of this application, the DMRS information may be indicated by an antenna port (antenna port) field in downlink control information (Downlink Control Information, DCI), or configured by a higher layer parameter.

Optionally, in this embodiment of this application, the DMRS information includes at least one of the following:
an indicator value in the antenna port field (namely, a value, or understood as a value corresponding to an indicator bit in the antenna port field);
a DMRS port;
a CDM group corresponding to the DMRS port;
a number of front-loaded DMRS symbols;
a number of additional DMRS symbols;
a number of symbols occupied by a DMRS; and
a scrambling identity of the DMRS.

Optionally, in this embodiment of this application, the number of additional DMRS symbols may be a number of additional DMRS symbols corresponding to a parameter dmrs-AdditionalPosition or the number of symbols occupied by the DMRS.

Optionally, in this embodiment of this application, the number of symbols occupied by the DMRS may be a number of symbols occupied by the DMRS in one time domain unit (for example, one slot).

Optionally, in this embodiment of this application, the indicator value in the antenna port field and the OCC information satisfy at least one of the following correspondences:
each indicator value corresponds to one piece of OCC information;
each indicator value corresponds to a plurality of pieces of OCC information;
a plurality of indicator values correspond to a same piece of OCC information; and
each indicator value set corresponds to one piece of OCC information.

Optionally, in this embodiment of this application, when each indicator value corresponds to a plurality of pieces of OCC information, a specific corresponding piece of OCC information may be determined by other signaling, for example, radio resource control (Radio Resource Control, RRC) signaling, media access control-control element (Media Access Control-Control Element, MAC-CE) signaling, or another DCI field, according to a default agreed rule, or through terminal selection.

For example, when a plurality of indicator values correspond to a same piece of OCC information, it is assumed that there are eight OCC sequences in total, but a number of terminals allowed for multiplexing is four, that is, a maximum of four OCC sequences are used for multiplexing. In this case, every two indicator values correspond to a same OCC sequence.

Optionally, in this embodiment of this application, when each indicator value set corresponds to one piece of OCC information, different indicator value sets correspond to different OCC information.

For example, when each indicator value set corresponds to one piece of OCC information, the indicator value set corresponds to an OCC sequence with a length of 4 when an indicated value belongs to a first value set (for example, 0 to 3), and corresponds to an OCC sequence with a length of 8 when an indicated value belongs to a second value set (for example, 4 to 11).

Optionally, in this embodiment of this application, the TDRA information or the SLIV information includes a default time domain resource allocation (default A) scheme of the first signal. In the default time domain resource allocation scheme, each piece of TDRA information or each piece of SLIV information corresponds to at least one piece of OCC information.

Optionally, in this embodiment of this application, a plurality of pieces of TDRA information or a plurality of pieces of SLIV information correspond to a same piece of OCC information.

Optionally, in this embodiment of this application, the TDRA information or the SLIV information and the OCC information are configured by a same higher layer parameter, for example, a higher layer parameter pusch-ConfigCommon or a higher layer parameter pusch-Config.

Optionally, in this embodiment of this application, the OCC information and a time domain resource, of the first signal, determined by the TDRA information or the SLIV information satisfy a first condition, where the first condition includes at least one of the following that:

A sum of a result obtained by multiplying a number of symbols occupied by the first signal by the OCC sequence length and a starting symbol index of the first signal does not exceed a number of symbols (for example, 14 symbols) corresponding to one slot. Herein, it may also be understood as that time domain symbols of the first signal based on OCC are in one slot.

A result obtained by subtracting a number of symbols occupied by a DMRS from the number of symbols occupied by the first signal is an integer multiple of the OCC sequence length.

The number of symbols occupied by the first signal is an integer multiple of the OCC sequence length.

For example, the TDRA information or the SLIV information is determined by using a newly defined default A scheme. For example, a column of OCC length information is added based on the original default A scheme, for example, OCC length columns in the following Table 1 and Table 2.

**Table 1: Default PUSCH time domain resource allocation A for normal cyclic prefix**

| (Default PUSCH time domain resource allocation A for normal CP) | | | | | |
|---|---|---|---|---|---|
| Index | PUSCH mapping type | K₂ | S | L | OCC length |
| 1 | Type A | j | 0 | 14 | 1 |
| 2 | Type A | j | 0 | 12 | 1 |
| 3 | Type A | j | 0 | 10 | 1 |
| 4 | Type B | j | 2 | 10 | 1 |
| 5 | Type B | j | 4 | 10 | 1 |
| 6 | Type B | j | 4 | 8 | 2 |
| 7 | Type B | j | 4 | 6 | 2 |
| 8 | Type A | j+1 | 0 | 14 | 1 |
| 9 | Type A | j+1 | 0 | 12 | 2 |
| 10 | Type A | j+1 | 0 | 10 | 1 |
| 11 | Type A | j+2 | 0 | 14 | 2 |
| 12 | Type A | j+2 | 0 | 12 | 4 |
| 13 | Type A | j+2 | 0 | 10 | 2 |
| 14 | Type B | j | 8 | 6 | 2 |
| 15 | Type A | j+3 | 0 | 14 | 1 |
| 16 | Type A | j+3 | 0 | 10 | 1 |

**Table 2: Default PUSCH time domain resource allocation A for extended CP**

| (Default PUSCH time domain resource allocation A for extended CP) | | | | | |
|---|---|---|---|---|---|
| Index | PUSCH mapping type | K₂ | S | L | OCC length |
| 1 | Type A | J | 0 | 8 | 1 |
| 2 | Type A | J | 0 | 12 | 1 |
| 3 | Type A | j | 0 | 10 | 1 |
| 4 | Type B | j | 2 | 10 | 1 |
| 5 | Type B | j | 4 | 4 | 1 |
| 6 | Type B | j | 4 | 8 | 2 |
| 7 | Type B | j | 4 | 6 | 2 |
| 8 | Type A | j+1 | 0 | 8 | 1 |
| 9 | Type A | j+1 | 0 | 12 | 2 |
| 10 | Type A | j+1 | 0 | 10 | 1 |
| 11 | Type A | j+2 | 0 | 6 | 2 |
| 12 | Type A | j+2 | 0 | 12 | 4 |
| 13 | Type A | j+2 | 0 | 10 | 2 |
| 14 | Type B | j | 8 | 4 | 1 |
| 15 | Type A | j+3 | 0 | 8 | 1 |
| 16 | Type A | j+3 | 0 | 10 | 1 |

When the higher layer parameter pusch-ConfigCommon does not include a TDRA configuration pusch-TimeDomainAllocationList, or the higher layer parameter pusch-Config does not include TDRA configurations pusch-TimeDomainAllocationList, pusch-TimeDomainAllocationListDCI-0-1, or pusch-TimeDomainAllocationListDCI-0-2, the TDRA information is determined by using the default A scheme.

Optionally, in this embodiment of this application, the DMRS port and the OCC information satisfy at least one of the following correspondences:
Each DMRS port corresponds to one piece of OCC information.

Each DMRS port corresponds to a plurality of pieces of OCC information.

A plurality of DMRS ports correspond to a same piece of OCC information.

For example, it is assumed that four terminals are multiplexed in a block-wise spreading (Block-wise spreading) scheme based on the OCC information: The network side device respectively indicates DMRS ports 0, 1, 2, and 3 to the four terminals, and the network side device configures or a protocol agrees on by default that the four DMRS ports respectively correspond to four OCC sequences in the following Table 3. For example, the DMRS port 0 corresponds to the 1^{st} OCC sequence (n=0), the DMRS port 1 corresponds to the 2^{nd} OCC sequence (n=1), the DMRS port 2 corresponds to the 3^{rd} OCC sequence (n=2), and the DMRS port 3 corresponds to the 4^{th} OCC sequence (n=3). In this way, the terminal can determine, through the indicated DMRS port, the OCC sequence used for the PUSCH multiplexing.

**Table 3**

| DMRS port n | OCC sequence wₙ |
|---|---|
| 0 | [+1 +1 +1 +1] |
| 1 | [+1 -j -1 +j] |
| 2 | [+1 -1 +1 -1] |
| 3 | [+1 +j -1 -j] |

To adjust the OCC sequence used by the terminal, an offset (offset) of mapping between the DMRS port and the OCC sequence may also be introduced. For example, offset=1, to be specific, the DMRS port 0 corresponds to the 2^{nd} OCC sequence (n=1), the DMRS port 1 corresponds to the 3^{rd} OCC sequence (n=2), the DMRS port 2 corresponds to the 4^{th} OCC sequence (n=3), and the DMRS port 3 corresponds to the 1^{st} OCC sequence (n=0).

Optionally, in this embodiment of this application, the CDM group corresponding to the DMRS port and the OCC information satisfy at least one of the following correspondences:
Each CDM group corresponds to one piece of OCC information.

Each CDM group corresponds to a plurality of pieces of OCC information.

A plurality of CDM groups correspond to a same piece of OCC information.

Optionally, in this embodiment of this application, a number of symbols of the DMRS (the number of front-loaded DMRS symbols, the number of additional DMRS symbols, or the number of symbols occupied by the DMRS) and the OCC information satisfy at least one of the following correspondences:
Each number of symbols corresponds to one piece of OCC information.

Each number of symbols corresponds to a plurality of pieces of OCC information.

A plurality of numbers of symbols correspond to a same piece of OCC information.

Each set of numbers of symbols corresponds to one piece of OCC information.

For example, different numbers of symbols correspond to different OCC information. For example, a number 1 of symbols corresponds to an OCC sequence with a length of 4. For example, a number 2 of symbols corresponds to an OCC sequence with a length of 8.

Optionally, in this embodiment of this application, the scrambling identity of the DMRS and the OCC information satisfy at least one of the following correspondences:
Each scrambling identity corresponds to one piece of OCC information.

Each scrambling identity corresponds to a plurality of pieces of OCC information.

A plurality of scrambling identities correspond to a same piece of OCC information.

Optionally, in this embodiment of this application, there is a correspondence between the RU information and the OCC information.

Optionally, in this embodiment of this application, the correspondence is agreed on by default by a protocol, or the correspondence is configured by the network side device. For example, a value fixedly corresponds to a specific piece of OCC information. Alternatively, a correspondence between each value and the OCC information is configured or adjusted via the RRC signaling or the MAC CE signaling. For another example, the correspondence between the RU information and the OCC information may also be agreed on by default by a protocol, or configured by the network side device.

Optionally, in this embodiment of this application, the OCC-related parameter may include at least one of the following: the OCC sequence set, the OCC sequence, the OCC sequence index set, the OCC sequence index, the OCC sequence length set, the OCC sequence length, and the OCC enabling information.

Optionally, in this embodiment of this application, the OCC-related parameter is indicated by first DCI. It may also be understood as that the terminal determines the OCC-related parameter based on the first DCI.

Optionally, in this embodiment of this application, the first DCI includes, but is not limited to, any one of the following: a modulation and coding scheme (Modulation and Coding Scheme, MCS) field, a redundancy version (Redundancy Version, RV) field, a frequency hopping flag (Frequency hopping flag) field, an antenna port (Antenna port) field, a hybrid automatic repeat request (Hybrid Automatic Repeat reQuest, HARQ) process number field, and another DCI field. The another DCI field may be a DCI field other than the MCS field, the RV field, the frequency hopping flag field, the antenna port field, and the HARQ process number field.

It should be noted that the another DCI field may be understood as a new DCI field, for example, a DCI field exclusively indicating the OCC information. When a first field (namely, a DCI field other than the another DCI field in the first DCI) is defaulted and occupies 0 bit, the first field may be re-defined as indicating the OCC information, which is equivalent to introducing a new DCI field.

For example, for DCI formats 0_1 and 0_2, a new DCI field may be introduced to indicate the OCC information. For example, the new DCI field may indicate at least one of the following:
OCC enabling information: 1 bit, indicating whether to enable OCC transmission.

OCC length: 1 bit, indicating an OCC length. For example, a value of 0 indicates that the OCC length is 2, and a value of 1 indicates that the OCC length is 1. There may be another number of bits. For example, 2-bit 01 directly indicates that the OCC length is 2, or 2-bit 11 directly indicates that the OCC length is 4.

OCC sequence index: 2 bits, indicating an index in the OCC sequence set, to determine the OCC sequence. For example, 00 indicates that the 1^{st} sequence [+1 +1 +1 +1] in the following OCC sequence set is used, and 01 indicates that the 2^{nd} sequence [+1 -j -1 + j] in the following OCC sequence set is used. There may also be another value or meaning, and the foregoing is merely an example.

For example, the OCC sequence index is indicated by at least some bits in the MCS field in the DCI. For example, the OCC sequence index is indicated by the highest two bits. 00 indicates that the OCC sequence index is 0. 01 indicates that the OCC sequence index is 1. 10 indicates that the OCC sequence index is 2. 11 indicates that the OCC sequence index is 3.

For example, the OCC sequence index is indicated by at least some bits in the RV field in the DCI. For example, the OCC length is indicated by two bits in the RV field. 00 indicates that the OCC length is 1. 01 indicates that the OCC length is 2. 10 indicates that the OCC length is 4. 11 indicates that the OCC length is 8.

For example, the OCC enabling information is indicated by the frequency hopping flag field in the DCI. For example, 0 represents enabling the OCC transmission, and 1 represents disabling the OCC transmission. Alternatively, 0 represents disabling the OCC transmission, and 1 represents enabling the OCC transmission.

Optionally, in this embodiment of this application, the terminal does not expect that both the OCC transmission and uplink frequency hopping transmission are enabled or configured.

Optionally, in this embodiment of this application, the OCC-related parameter is indicated by a higher layer parameter. For example,

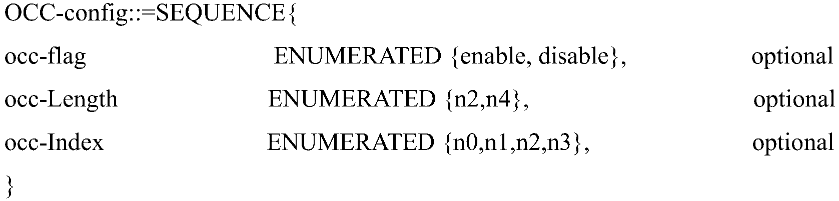

For another example,

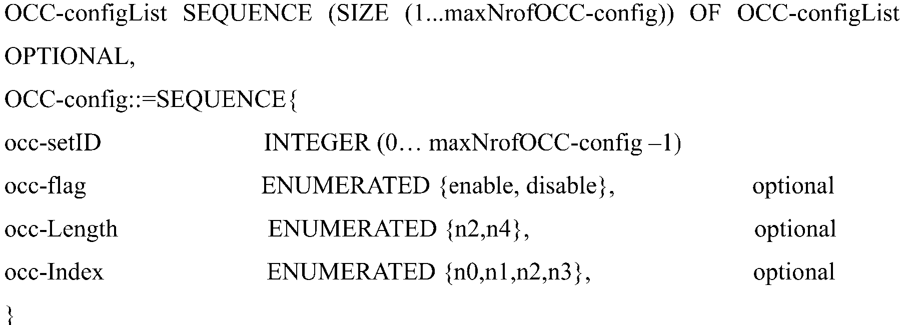

Optionally, in this embodiment of this application, when the OCC-related parameter includes the OCC enabling information, the OCC enabling information may be determined depending on whether a higher layer parameter configuration provides an OCC information configuration. For example, if the higher layer parameter provides the foregoing OCC-config, the OCC transmission is considered enabled. If the higher layer parameter does not provide the foregoing OCC-config, the OCC transmission is considered disabled.

Optionally, in this embodiment of this application, the OCC-related parameter is jointly indicated by the first DCI and the higher layer parameter.

A first set is configured by the higher layer parameter, and the first DCI indicates one element in the first set. The first set includes any one of the following:
a set-form item in the OCC information;
a plurality of non-set-form items in the OCC information; and
a plurality of groups of OCC information.

It should be noted that one element in the first set may be understood as one item or one group of OCC information in the first set. If the first set configured by the higher layer parameter includes only one value or one group of configurations, the first DCI does not need to indicate the value or the group of configurations.

Optionally, in this embodiment of this application, the set-form item may include at least one of the following: the OCC sequence set, the OCC sequence length set, and the OCC sequence index set.

Optionally, in this embodiment of this application, the non-set-form item may include at least one of the following: the OCC sequence, the OCC sequence index, the OCC sequence length, and the OCC enabling information.

For example, the first set (for example, the OCC sequence length set) is configured as {2, 4, 8} by the higher layer parameter, and an index in the first set is indicated by at least some bits in the MCS field in the DCI. For example, 00 represents that the OCC length is the 1^{st} value, namely, 2, in the first set; 01 represents that the OCC length is the 2^{nd} value, namely, 4, in the first set; 10 represents that the OCC length is the 3^{rd} value, namely, 8, in the first set; and 11 represents a reserved (reserved) value.

For example, the first set is configured by the higher-layer parameter, and the first set includes two groups of OCC parameter configurations, as shown below:
1^{st} group of OCC parameter configurations: 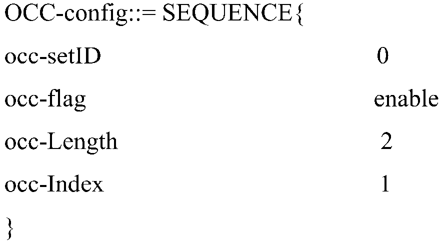
2^{nd} group of OCC parameter configurations:

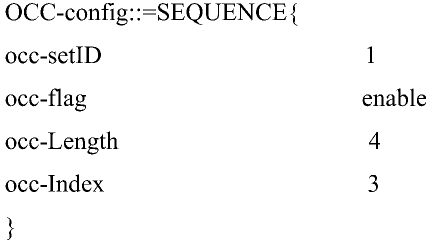

An index in the first set may be indicated by the frequency hopping flag field. For example, 0 represents that the first information is the 1^{st} group of parameter configurations in the first set, and 1 represents that the first information is the 2^{nd} group of parameter configurations in the first set.

For example, the first set (for example, the OCC sequence set) is configured by the higher layer parameter, and includes OCC sequences [+1 +1 +1 +1], [+1 -j -1 + j], [+1 -1 +1 -1], and [+1 + j -1 -j]. The OCC sequence index may be indicated by at least some bits in the RV field. For example, 00 represents that the determined OCC sequence is the 1^{st} sequence [+1 +1 +1 +1] in the first set, and 01 represents that the determined OCC sequence is the 2^{nd} sequence [+1 -j -1 + j] in the first set.

Optionally, in this embodiment of this application, an indication manner of the first DCI includes any one of the following:
performing indication by using a first number of bits, where the first number of bits is related to a number of elements in the first set; and
performing indication by using a second number of bits, where the second number of bits is related to a maximum number of elements in the first set.

It should be noted that, the number of elements in the first set may be understood as an actual number of elements included in the first set. Assuming that the first set includes only two elements, only one bit in the DCI needs to be used for indication. For example, 0 corresponds to the 1^{st} element, and 1 corresponds to the 2^{nd} element.

The maximum number of elements in the first set may be understood as a maximum number of elements supported by the first set. It is assumed that the maximum number of elements supported by the first set is four. In this case, even if the first set includes only two elements, two bits in the DCI need to be used for indication.

An embodiment of this application provides an OCC determining method. A terminal may determine OCC information based on first information, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device. In this solution, the terminal may determine, based on the first information, the OCC information related to the transmission of the first signal. In other words, the terminal flexibly determines the OCC information used for the transmission of the first signal, to implement multiplexing based on the OCC information, so that orthogonality of multiplexing of a plurality of terminals is ensured, and an uplink transmission capacity is improved.

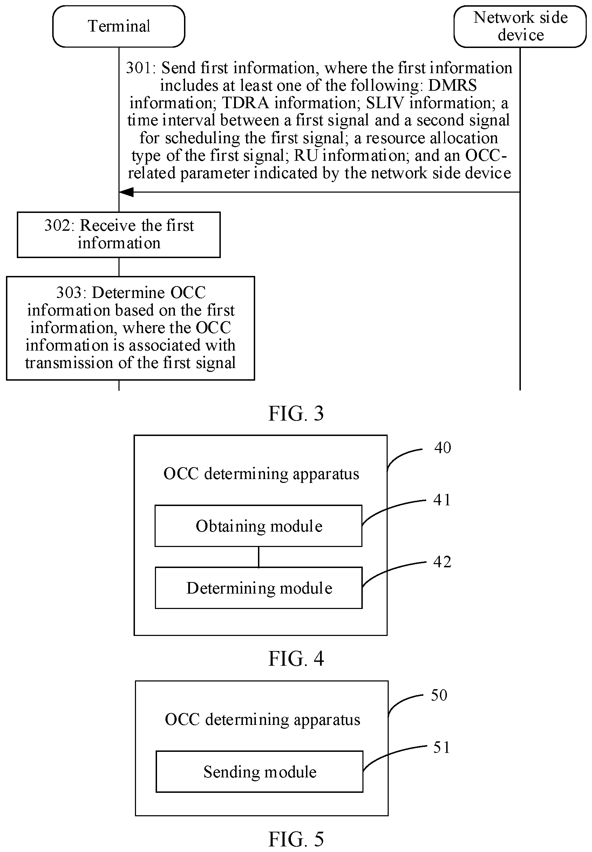

An embodiment of this application provides an OCC determining method. FIG. 3 is a flowchart of an OCC determining method according to an embodiment of this application. As shown in FIG. 3, the OCC determining method provided in this embodiment of this application may include the following step 301 to step 303.

Step 301: A network side device sends first information to a terminal.

Step 302: The terminal receives the first information sent by the network side device.

Step 303: The terminal determines OCC information based on the first information.

In this embodiment of this application, the first information is used to determine the OCC information, and the OCC information is associated with transmission of a first signal. The first information includes at least one of the following:
DMRS information;
TDRA information;
SLIV information;
a time interval between the first signal and a second signal for scheduling the first signal;
a resource allocation type of the first signal;
RU information; and
an OCC-related parameter indicated by the network side device.

Optionally, in this embodiment of this application, the OCC information may include at least one of the following: an OCC sequence set, an OCC sequence, an OCC sequence index set, an OCC sequence index, an OCC sequence length set, an OCC sequence length, and OCC enabling information.

The OCC enabling information is used to enable whether the transmission of the first signal is based on the OCC information.

Optionally, in this embodiment of this application, the DMRS information includes at least one of the following:
an indicator value in an antenna port field;
a DMRS port;
a CDM group corresponding to the DMRS port;
a number of front-loaded DMRS symbols;
a number of additional DMRS symbols;
a number of symbols occupied by a DMRS; and
a scrambling identity of the DMRS.

Optionally, in this embodiment of this application, the indicator value in the antenna port field and the OCC information satisfy at least one of the following correspondences:
Each indicator value corresponds to one piece of OCC information.

Each indicator value corresponds to a plurality of pieces of OCC information.

A plurality of indicator values correspond to a same piece of OCC information.

Each indicator value set corresponds to one piece of OCC information.

Optionally, in this embodiment of this application, the TDRA information or the SLIV information includes a default time domain resource allocation scheme of the first signal.

In the default time domain resource allocation scheme, each piece of TDRA information or each piece of SLIV information corresponds to at least one piece of OCC information.

Optionally, in this embodiment of this application, the OCC information and a time domain resource, of the first signal, determined by the TDRA information or the SLIV information satisfy a first condition.

The first condition includes at least one of the following that:
A sum of a result obtained by multiplying a number of symbols occupied by the first signal by the OCC sequence length and a starting symbol index of the first signal does not exceed a number of symbols corresponding to one slot.

A result obtained by subtracting a number of symbols occupied by a DMRS from the number of symbols occupied by the first signal is an integer multiple of the OCC sequence length.

The number of symbols occupied by the first signal is an integer multiple of the OCC sequence length.

Optionally, in this embodiment of this application, the OCC-related parameter is indicated by the network side device by using first DCI.

Optionally, in this embodiment of this application, the first DCI includes, but is not limited to, any one of the following: an MCS field, an RV field, a frequency hopping flag field, an antenna port field, a HARQ process number field, and another DCI field.

Optionally, in this embodiment of this application, the OCC-related parameter is jointly indicated by the network side device by using the first DCI and a higher layer parameter.

A first set is configured by the higher layer parameter, and the first DCI indicates one element in the first set.

The first set includes any one of the following:
a set-form item in the OCC information;
a plurality of non-set-form items in the OCC information; and
a plurality of groups of OCC information.

Optionally, in this embodiment of this application, an indication manner of the first DCI includes any one of the following:
performing indication by using a first number of bits, where the first number of bits is related to a number of elements in the first set; and
performing indication by using a second number of bits, where the second number of bits is related to a maximum number of elements in the first set.

It should be noted that, for specific explanations and descriptions of the first information, the OCC information, and related solutions thereof, refer to the descriptions in the foregoing embodiments. Details are not described herein again.

An embodiment of this application provides an OCC determining method. A network side device may send first information to a terminal, to determine OCC information. The OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by the network side device. In this solution, the network side device may indicate the first information to the terminal, so that the terminal can determine, based on the first information, the OCC information related to the transmission of the first signal. In other words, the terminal flexibly determines the OCC information used for the transmission of the first signal, to implement multiplexing based on the OCC information, so that orthogonality of multiplexing of a plurality of terminals is ensured, and an uplink transmission capacity is improved.

The foregoing method embodiments or various possible implementations of the method embodiments may be separately performed, or any two or more may be performed in combination with each other. Specifically, the method embodiments or the possible implementations may be determined based on an actual use requirement, which is not limited in embodiments of this application.

The OCC determining methods provided in embodiments of this application may be performed by an OCC determining apparatus. In embodiments of this application, the OCC determining apparatus provided in embodiments of this application is described by using an example in which the OCC determining apparatus performs the OCC determining method.

FIG. 4 is a diagram of a possible structure of an OCC determining apparatus according to an embodiment of this application. As shown in FIG. 4, the OCC determining apparatus 40 may include an obtaining module 41 and a determining module 42.

The obtaining module 41 is configured to obtain first information. The determining module 42 is configured to determine OCC information based on the first information obtained by the obtaining module 41, where the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

In a possible implementation, the OCC information includes at least one of the following: an OCC sequence set, an OCC sequence, an OCC sequence index set, an OCC sequence index, an OCC sequence length set, an OCC sequence length, and OCC enabling information. The OCC enabling information is used to enable whether the transmission of the first signal is based on the OCC information.

In a possible implementation, the DMRS information includes at least one of the following:
an indicator value in an antenna port field;
a DMRS port;
a CDM group corresponding to the DMRS port;
a number of front-loaded DMRS symbols;
a number of additional DMRS symbols;
a number of symbols occupied by a DMRS; and
a scrambling identity of the DMRS.

In a possible implementation, the indicator value in the antenna port field and the OCC information satisfy at least one of the following correspondences:
Each indicator value corresponds to one piece of OCC information.

Each indicator value corresponds to a plurality of pieces of OCC information.

A plurality of indicator values correspond to a same piece of OCC information.

Each indicator value set corresponds to one piece of OCC information.

In a possible implementation, the TDRA information or the SLIV information includes a default time domain resource allocation scheme of the first signal. In the default time domain resource allocation scheme, each piece of TDRA information or each piece of SLIV information corresponds to at least one piece of OCC information.

In a possible implementation, the OCC information and a time domain resource, of the first signal, determined by the TDRA information or the SLIV information satisfy a first condition, where the first condition includes at least one of the following that:

A sum of a result obtained by multiplying a number of symbols occupied by the first signal by the OCC sequence length and a starting symbol index of the first signal does not exceed a number of symbols corresponding to one slot.

A result obtained by subtracting a number of symbols occupied by a DMRS from the number of symbols occupied by the first signal is an integer multiple of the OCC sequence length.

The number of symbols occupied by the first signal is an integer multiple of the OCC sequence length.

In a possible implementation, the OCC-related parameter is indicated by first DCI. The first DCI includes any one of the following: an MCS field, an RV field, a frequency hopping flag field, an antenna port field, a HARQ process number field, and another DCI field.

In a possible implementation, the OCC-related parameter is jointly indicated by the first DCI and a higher layer parameter. A first set is configured by the higher layer parameter, and the first DCI indicates one element in the first set. The first set includes any one of the following:
a set-form item in the OCC information;
a plurality of non-set-form items in the OCC information; and
a plurality of groups of OCC information.

In a possible implementation, an indication manner of the first DCI includes any one of the following:
performing indication by using a first number of bits, where the first number of bits is related to a number of elements in the first set; and
performing indication by using a second number of bits, where the second number of bits is related to a maximum number of elements in the first set.

An embodiment of this application provides an OCC determining apparatus. The OCC determining apparatus may determine, based on first information, OCC information related to transmission of a first signal. In other words, the OCC determining apparatus flexibly determines the OCC information used for the transmission of the first signal, to implement multiplexing based on the OCC information, so that orthogonality of multiplexing of a plurality of terminals is ensured, and an uplink transmission capacity is improved.

The OCC determining apparatus in this embodiment of this application may be an electronic device, for example, an electronic device having an operating system, or may be a component in the electronic device, for example, an integrated circuit or a chip. The electronic device may be a terminal, or may be another device other than the terminal. For example, the terminal may include, but is not limited to, the types of the terminal 11 listed above, and the another device may be a server, a network attached storage (Network Attached Storage, NAS), or the like. This is not specifically limited in embodiments of this application.

The OCC determining apparatus provided in this embodiment of this application can implement each process implemented in the foregoing OCC determining method embodiments, and achieve the same technical effects. To avoid repetition, details are not described herein again.

FIG. 5 is a diagram of a possible structure of an OCC determining apparatus according to an embodiment of this application. As shown in FIG. 5, the OCC determining apparatus 50 may include a sending module 51.

The sending module 51 is configured to send first information to a terminal, where the first information is used to determine OCC information, and the OCC information is associated with transmission of a first signal. The first information includes at least one of the following: DMRS information; TDRA information; SLIV information; a time interval between the first signal and a second signal for scheduling the first signal; a resource allocation type of the first signal; RU information; and an OCC-related parameter indicated by a network side device.

In a possible implementation, the OCC information includes at least one of the following: an OCC sequence set, an OCC sequence, an OCC sequence index set, an OCC sequence index, an OCC sequence length set, an OCC sequence length, and OCC enabling information. The OCC enabling information is used to enable whether the transmission of the first signal is based on the OCC information.

In a possible implementation, the DMRS information includes at least one of the following:
an indicator value in an antenna port field;
a DMRS port;
a CDM group corresponding to the DMRS port;
a number of front-loaded DMRS symbols;
a number of additional DMRS symbols;
a number of symbols occupied by a DMRS; and
a scrambling identity of the DMRS.

In a possible implementation, the indicator value in the antenna port field and the OCC information satisfy at least one of the following correspondences:
Each indicator value corresponds to one piece of OCC information.

Each indicator value corresponds to a plurality of pieces of OCC information.

A plurality of indicator values correspond to a same piece of OCC information.

Each indicator value set corresponds to one piece of OCC information.

In a possible implementation, the TDRA information or the SLIV information includes a default time domain resource allocation scheme of the first signal. In the default time domain resource allocation scheme, each piece of TDRA information or each piece of SLIV information corresponds to at least one piece of OCC information.

In a possible implementation, the OCC information and a time domain resource, of the first signal, determined by the TDRA information or the SLIV information satisfy a first condition, where the first condition includes at least one of the following that:

A sum of a result obtained by multiplying a number of symbols occupied by the first signal by the OCC sequence length and a starting symbol index of the first signal does not exceed a number of symbols corresponding to one slot.

A result obtained by subtracting a number of symbols occupied by a DMRS from the number of symbols occupied by the first signal is an integer multiple of the OCC sequence length.

The number of symbols occupied by the first signal is an integer multiple of the OCC sequence length.

In a possible implementation, the OCC-related parameter is indicated by the network side device by using first DCI. The first DCI includes any one of the following: an MCS field, an RV field, a frequency hopping flag field, an antenna port field, a HARQ process number field, and another DCI field.

In a possible implementation, the OCC-related parameter is jointly indicated by the network side device by using the first DCI and a higher layer parameter. A first set is configured by the higher layer parameter, and the first DCI indicates one element in the first set. The first set includes any one of the following:
a set-form item in the OCC information;
a plurality of non-set-form items in the OCC information; and
a plurality of groups of OCC information.

In a possible implementation, an indication manner of the first DCI includes any one of the following:
performing indication by using a first number of bits, where the first number of bits is related to a number of elements in the first set; and
performing indication by using a second number of bits, where the second number of bits is related to a maximum number of elements in the first set.

An embodiment of this application provides an OCC determining apparatus. The OCC determining apparatus may indicate first information to a terminal, so that the terminal can determine, based on the first information, OCC information related to transmission of a first signal. In other words, the terminal flexibly determines the OCC information used for the transmission of the first signal, to implement multiplexing based on the OCC information, so that orthogonality of multiplexing of a plurality of terminals is ensured, and an uplink transmission capacity is improved.

The OCC determining apparatus provided in this embodiment of this application can implement each process implemented in the foregoing OCC determining method embodiments, and achieve the same technical effects. To avoid repetition, details are not described herein again.

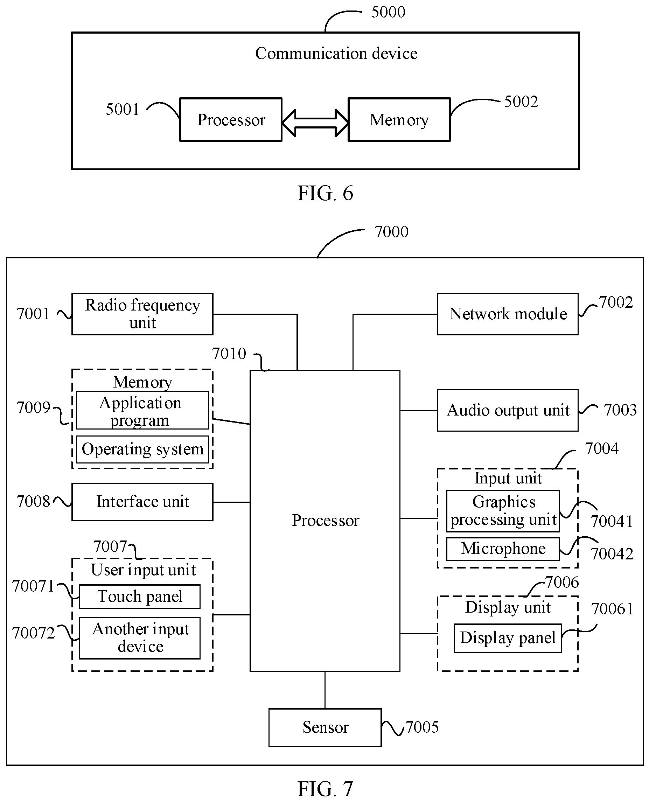

As shown in FIG. 6, an embodiment of this application further provides a communication device 5000, including a processor 5001 and a memory 5002. The memory 5002 stores a program or instructions executable on the processor 5001. For example, when the communication device 5000 is a terminal, and when the program or the instructions are executed by the processor 5001, each step of the terminal side method embodiment is implemented, and the same technical effects can be achieved. To avoid repetition, details are not described herein again. When the communication device 5000 is a network side device, and when the program or the instructions are executed by the processor 5001, each step of the network side device method embodiments is implemented, and the same technical effects can be achieved. To avoid repetition, details are not described herein again.

An embodiment of this application further provides a terminal, including a processor and a communication interface. The communication interface is coupled to the processor, and the processor is configured to run a program or instructions, to implement a step of the foregoing OCC determining method embodiments. The terminal embodiment corresponds to the foregoing terminal side method embodiment, each implementation process and implementation of the foregoing method embodiment may be applied to the terminal embodiment, and the same technical effects can be achieved. Specifically, FIG. 7 is a diagram of a hardware structure of a terminal according to an embodiment of this application.

The terminal 7000 includes, but is not limited to, at least some components of a radio frequency unit 7001, a network module 7002, an audio output unit 7003, an input unit 7004, a sensor 7005, a display unit 7006, a user input unit 7007, an interface unit 7008, a memory 7009, a processor 7010, and the like.

A person skilled in the art may understand that the terminal 7000 may further include a power supply (for example, a battery) that supplies power to each component. The power supply may be logically connected to the processor 7010 through a power supply management system, to implement functions such as charging and discharging management, and power consumption management through the power supply management system. The structure of the terminal shown in FIG. 7 constitutes no limitation on the terminal, and the terminal may include more or fewer components than those shown in the figure, or combine some components, or have different component arrangements. Details are not described herein.

It should be understood that, in embodiments of this application, the input unit 7004 may include a graphics processing unit (Graphics Processing Unit, GPU) 70041 and a microphone 70042. The graphics processing unit 70041 performs processing on image data of a static picture or a video that is obtained by an image acquisition device (for example, a camera) in a video acquisition mode or an image acquisition mode. The display unit 7006 may include a display panel 70061. The display panel 70061 may be configured by using a liquid crystal display, an organic light-emitting diode, or the like. The user input unit 7007 includes at least one of a touch panel 70071 and another input device 70072. The touch panel 70071 is also referred to as a touchscreen. The touch panel 70071 may include two parts: a touch detection apparatus and a touch controller. The another input device 70072 may include, but is not limited to, a physical keyboard, a functional key (for example, a volume control key or a switch key), a track ball, a mouse, and a joystick. Details are not described herein.

In this embodiment of this application, after receiving downlink data from a network side device, the radio frequency unit 7001 may transmit the downlink data to the processor 7010 for processing. In addition, the radio frequency unit 7001 may send uplink data to the network side device. Generally, the radio frequency unit 7001 includes, but is not limited to, an antenna, an amplifier, a transceiver, a coupler, a low noise amplifier, a duplexer, and the like.

The memory 7009 may be configured to store a software program or instructions and various data. The memory 7009 may mainly include a first storage region storing the program or the instructions and a second storage region storing the data. The first storage region may store an operating system, an application program or instructions needed by at least one function (for example, a sound playback function and an image display function), and the like. In addition, the memory 7009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 7009 in this embodiment of this application includes but is not limited to these memories and any other memory of a suitable type.

The processor 7010 may include one or more processing units. Optionally, the processor 7010 integrates an application processor and a modem processor. The application processor mainly processes operations related to an operating system, a user interface, an application, and the like. The modem processor mainly processes wireless communication signals, and is, for example, a baseband processor. It may be understood that the foregoing modem processor may not be integrated into the processor 7010.

The terminal provided in this embodiment of this application can implement each process implemented in the foregoing method embodiments, and achieve same technical effects. For an implementation process of each implementation mentioned in this embodiment, refer to related descriptions in the foregoing OCC determining method embodiments. To avoid repetition, details are not described herein again.

An embodiment of this application further provides a network side device, including a processor and a communication interface. The communication interface is coupled to the processor, and the processor is configured to run a program or instructions, to implement a step of the foregoing OCC determining method embodiments. The embodiment of the network side device corresponds to the foregoing method embodiment of the network side device. Each implementation process and implementation of the foregoing method embodiment are all applicable to the embodiment of the network side device, and the same technical effects can be achieved.

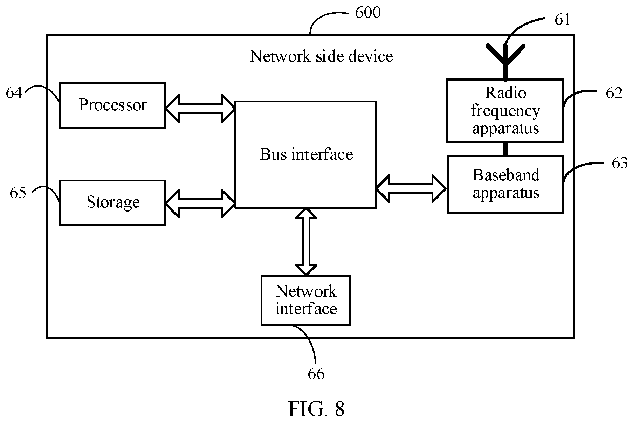

Specifically, an embodiment of this application further provides a network side device. As shown in FIG. 8, the network side device 600 includes: an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information through the antenna 61, and sends the received information to the baseband apparatus 63 for processing. In a downlink direction, the baseband apparatus 63 processes to-be-sent information, and sends the processed information to the radio frequency apparatus 62. The radio frequency apparatus 62 processes the received information, and then sends the processed information through the antenna 61.

The method performed by the network side device in the foregoing embodiment may be implemented by the baseband apparatus 63. The baseband apparatus 63 includes a baseband processor.

The baseband apparatus 63 may include, for example, at least one baseband board. A plurality of chips are disposed on the baseband board. As shown in FIG. 8, one of the chips is, for example, the baseband processor, and is connected to the memory 65 through a bus interface to invoke a program in the memory 65, to perform an operation of a network device shown in the foregoing method embodiment.

The network side device may further include a network interface 66, and the interface, for example, is a common public radio interface (Common Public Radio Interface, CPRI).

Specifically, the network side device 600 in embodiments of the present invention further includes instructions or a program stored in the memory 65 and executable on the processor 64. The processor 64 invokes the instructions or the program in the memory 65 to perform the method performed by each module shown in the OCC determining apparatus, and achieves the same technical effects. To avoid repetition, details are not described herein again.

An embodiment of this application further provides a readable storage medium. The readable storage medium stores a program or instructions. When the program or the instructions are executed by a processor, each process of the OCC determining method embodiments is implemented, and the same technical effects can be achieved. To avoid repetition, details are not described herein.

The processor is a processor in the terminal described in the foregoing embodiment. The readable storage medium includes a computer-readable storage medium, for example, a computer read-only memory ROM, a random access memory RAM, a magnetic disk, or an optical disk. In some examples, the readable storage medium may be a non-transient readable storage medium.

An embodiment of this application further provides a chip. The chip includes a processor and a communication interface. The communication interface is coupled to the processor. The processor is configured to execute a program or instructions, to implement each process of the OCC determining method embodiments, and the same technical effects can be achieved. To avoid repetition, details are not described herein.

It should be understood that the chip mentioned in this embodiment of this application may also be referred to as a system level chip, a system chip, a chip system, a system on a chip, or the like.

An embodiment of this application further provides a computer program/program product. The computer program/program product is stored in a storage medium. The computer program/program product is executed by at least one processor to implement each process of the OCC determining method embodiments, and the same technical effects can be achieved. To avoid repetition, details are not described herein.

An embodiment of this application further provides a wireless communication system, including a terminal and a network side device. The terminal may be configured to perform a step of the OCC determining method. The network side device may be configured to perform a step of the OCC determining method.

It should be noted that in this specification, the term "include", "comprise", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, an element defined by a sentence "including one..." does not exclude existence of other same elements in the process, the method, the object, or the apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence based on the related functions. For example, the described method may be performed in a different order than a described order, and various steps may be added, omitted, or combined. In addition, features described with reference to some examples may be combined in other examples.

Through the descriptions of the foregoing implementations, a person skilled in the art may clearly understand that the method according to the foregoing embodiment may be implemented by using a computer software product and a necessary general hardware platform, and certainly, may alternatively be implemented by hardware. The computer software product is stored in a storage medium (for example, a ROM, a RAM, a magnetic disk, or an optical disc) and includes several instructions for instructing a terminal or a network side device to perform the method described in embodiments of this application.

Embodiments of this application are described above with reference to the accompanying drawings. However, this application is not limited to the specific implementations described above, and the specific implementations are merely examples and constitute no limitations. A person of ordinary skill in the art may further make various forms of implementations under the inspiration of this application without departing from the spirit of this application and the protection scope of the claims, and the implementations shall all fall within the protection of this application.

## Claims

1. An orthogonal cover code OCC determining method, comprising:
obtaining, by a terminal, first information; and
determining, by the terminal, OCC information based on the first information, wherein the OCC information is associated with transmission of a first signal, wherein
the first information comprises at least one of the following:
demodulation reference signal DMRS information;
time domain resource allocation TDRA information;
start and length indicator value SLIV information;
a time interval between the first signal and a second signal for scheduling the first signal;
a resource allocation type of the first signal;
resource unit RU information; and
an OCC-related parameter indicated by a network side device.

2. The method according to claim 1, wherein the OCC information comprises at least one of the following: an OCC sequence set, an OCC sequence, an OCC sequence index set, an OCC sequence index, an OCC sequence length set, an OCC sequence length, and OCC enabling information, wherein
the OCC enabling information is used to enable whether the transmission of the first signal is based on the OCC information.

3. The method according to claim 1 or 2, wherein the DMRS information comprises at least one of the following:
an indicator value in an antenna port field;
a DMRS port;
a code division multiplexing CDM group corresponding to the DMRS port;
a number of front-loaded DMRS symbols;
a number of additional DMRS symbols;
a number of symbols occupied by a DMRS; and
a scrambling identity of the DMRS.

4. The method according to claim 3, wherein the indicator value in the antenna port field and the OCC information satisfy at least one of the following correspondences:
each indicator value corresponds to one piece of OCC information;
each indicator value corresponds to a plurality of pieces of OCC information;
a plurality of indicator values correspond to a same piece of OCC information; and
each indicator value set corresponds to one piece of OCC information.

5. The method according to claim 1 or 2, wherein the TDRA information or the SLIV information comprises a default time domain resource allocation scheme of the first signal, wherein
in the default time domain resource allocation scheme, each piece of TDRA information or each piece of SLIV information corresponds to at least one piece of OCC information.

6. The method according to claim 5, wherein the OCC information and a time domain resource, of the first signal, determined by the TDRA information or the SLIV information satisfy a first condition, wherein
the first condition comprises at least one of the following that:
a sum of a result obtained by multiplying a number of symbols occupied by the first signal by an OCC sequence length and a starting symbol index of the first signal does not exceed a number of symbols corresponding to one slot;
a result obtained by subtracting a number of symbols occupied by a DMRS from the number of symbols occupied by the first signal is an integer multiple of the OCC sequence length; and
the number of symbols occupied by the first signal is an integer multiple of the OCC sequence length.

7. The method according to claim 1 or 2, wherein the OCC-related parameter is indicated by first downlink control information DCI, wherein
the first DCI comprises any one of the following: a modulation and coding scheme MCS field, a redundancy version RV field, a frequency hopping flag field, an antenna port field, a hybrid automatic repeat request HARQ process number field, and another DCI field.

8. The method according to claim 1, 2, or 7, wherein the OCC-related parameter is jointly indicated by first DCI and a higher layer parameter, wherein
a first set is configured by the higher layer parameter, and the first DCI indicates one element in the first set; and
the first set comprises any one of the following:
a set-form item in the OCC information;
a plurality of non-set-form items in the OCC information; and
a plurality of groups of OCC information.

9. The method according to claim 8, wherein an indication manner of the first DCI comprises any one of the following:
performing indication by using a first number of bits, wherein the first number of bits is related to a number of elements in the first set; and
performing indication by using a second number of bits, wherein the second number of bits is related to a maximum number of elements in the first set.

10. An OCC determining method, comprising:
sending, by a network side device, first information to a terminal, wherein the first information is used to determine OCC information, and the OCC information is associated with transmission of a first signal, wherein
the first information comprises at least one of the following:
DMRS information;
TDRA information;
SLIV information;
a time interval between the first signal and a second signal for scheduling the first signal;
a resource allocation type of the first signal;
RU information; and
an OCC-related parameter indicated by the network side device.

11. The method according to claim 10, wherein the OCC information comprises at least one of the following: an OCC sequence set, an OCC sequence, an OCC sequence index set, an OCC sequence index, an OCC sequence length set, an OCC sequence length, and OCC enabling information, wherein
the OCC enabling information is used to enable whether the transmission of the first signal is based on the OCC information.

12. The method according to claim 10 or 11, wherein the DMRS information comprises at least one of the following:
an indicator value in an antenna port field;
a DMRS port;
a CDM group corresponding to the DMRS port;
a number of front-loaded DMRS symbols;
a number of additional DMRS symbols;
a number of symbols occupied by a DMRS; and
a scrambling identity of the DMRS.

13. The method according to claim 12, wherein the indicator value in the antenna port field and the OCC information satisfy at least one of the following correspondences:
each indicator value corresponds to one piece of OCC information;
each indicator value corresponds to a plurality of pieces of OCC information;
a plurality of indicator values correspond to a same piece of OCC information; and
each indicator value set corresponds to one piece of OCC information.

14. The method according to claim 10 or 11, wherein the TDRA information or the SLIV information comprises a default time domain resource allocation scheme of the first signal, wherein
in the default time domain resource allocation scheme, each piece of TDRA information or each piece of SLIV information corresponds to at least one piece of OCC information.

15. The method according to claim 14, wherein the OCC information and a time domain resource, of the first signal, determined by the TDRA information or the SLIV information satisfy a first condition, wherein
the first condition comprises at least one of the following that:
a sum of a result obtained by multiplying a number of symbols occupied by the first signal by an OCC sequence length and a starting symbol index of the first signal does not exceed a number of symbols corresponding to one slot;
a result obtained by subtracting a number of symbols occupied by a DMRS from the number of symbols occupied by the first signal is an integer multiple of the OCC sequence length; and
the number of symbols occupied by the first signal is an integer multiple of the OCC sequence length.

16. The method according to claim 10 or 11, wherein the OCC-related parameter is indicated by the network side device by using first DCI, wherein
the first DCI comprises any one of the following: an MCS field, an RV field, a frequency hopping flag field, an antenna port field, a HARQ process number field, and another DCI field.

17. The method according to claim 10, 11, or 16, wherein the OCC-related parameter is jointly indicated by the network side device by using first DCI and a higher layer parameter, wherein
a first set is configured by the higher layer parameter, and the first DCI indicates one element in the first set; and
the first set comprises any one of the following:
a set-form item in the OCC information;
a plurality of non-set-form items in the OCC information; and
a plurality of groups of OCC information.

18. The method according to claim 17, wherein an indication manner of the first DCI comprises any one of the following:
performing indication by using a first number of bits, wherein the first number of bits is related to a number of elements in the first set; and
performing indication by using a second number of bits, wherein the second number of bits is related to a maximum number of elements in the first set.

19. An OCC determining apparatus, comprising an obtaining module and a determining module, wherein
the obtaining module is configured to obtain first information; and
the determining module is configured to determine OCC information based on the first information obtained by the obtaining module, wherein the OCC information is associated with transmission of a first signal, wherein
the first information comprises at least one of the following:
DMRS information;
TDRA information;
SLIV information;
a time interval between the first signal and a second signal for scheduling the first signal;
a resource allocation type of the first signal;
RU information; and
an OCC-related parameter indicated by a network side device.

20. An OCC determining apparatus, comprising a sending module, wherein
the sending module is configured to send first information to a terminal, wherein the first information is used to determine OCC information, and the OCC information is associated with transmission of a first signal, wherein
the first information comprises at least one of the following:
DMRS information;
TDRA information;
SLIV information;
a time interval between the first signal and a second signal for scheduling the first signal;
a resource allocation type of the first signal;
RU information; and
an OCC-related parameter indicated by a network side device.

21. A terminal, comprising a processor and a memory, wherein the memory stores a program or instructions executable on the processor, and when the program or the instructions are executed by the processor, the steps of the OCC determining method according to any one of claims 1 to 9 are implemented.

22. A network side device, comprising a processor and a memory, wherein the memory stores a program or instructions executable on the processor, and when the program or the instruction are executed by the processor, the steps of the OCC determining method according to any one of claims 10 to 18 are implemented.

23. A readable storage medium, wherein the readable storage medium stores a program or instructions, and when the program or the instructions are executed by a processor, the steps of the OCC determining method according to any one of claims 1 to 9 are implemented, or the steps of the OCC determining method according to any one of claims 10 to 18 are implemented.
